# EUROPEAN PATENT APPLICATION

(11) **EP 4 567 001 A1**
(43) Date of publication of application: **11.06.2025**
(21) Application number: 24218170.9
(22) Date of filing: 06.12.2024
(51) Int. Cl.: C02F 1/20, B01D 17/02, B03D 1/14, B03D 1/24, C02F 1/24, C02F 101/36

(54) **METHOD AND APPARATUS FOR TREATING WATER CONTAINING PER- AND POLYFLUOROALKYL SUBSTANCES (PFAS)**

(30) Priority: 08.12.2023 DK PA202370600
(71) Applicant: ULTRAAQUA A/S, 9220 Aalborg Ø (DK)
(72) Inventor: Nielsen, Ulf, 9220 Aalborg Ø (DK); Bitsch, Steen, 9220 Aalborg Ø (DK)
(74) Representative: Münzer, Marc Eric

(57) **Abstract**

Apparatus for treating water containing PFAS, said apparatus comprising: a tank suitable for containing water, a bubble generator arranged to, when water is arranged in the tank, generate bubbles in the water in the tank, a permeable separation element comprising a lower surface, said permeable separation element being arranged such that when water is arranged in the tank, said lower surface is arranged above an upper surface of the water and arranged such that an average angle between the lower surface of the permeable separation element and the upper surface of the water is greater than 2 degrees, and a water droplet collecting channel arranged along a lower edge of the permeable separation element. In this way, an aerosol is generated at the surface of the water via the bubbles. The water droplets in the aerosol contain the PFAS. The aerosol is guided through the separation element which collects the water droplets containing PFAS. The water droplets containing PFAS are led into the water droplet collecting channel, whereby the PFAS concentrate can be removed from the system.

## Description

The current invention relates to a method and apparatus for treating water containing Per- and polyfluoroalkyl substances (PFAS). Per- and polyfluoroalkyl substances are substances which are used in various industrial applications. These chemicals are very hard to break down and they pose environmental risks, human health risks etc. As such it is important to remove dangerous levels of PFAS from water before using or releasing the water to the environment.

According to the current specification, the phrase "contaminated water" is understood as water which contains PFAS chemicals. Other chemicals/substances could also be in the water. According to the current specification, the phrase "separating PFAS from contaminated water" is to be understood in that contaminated water is processed in a way such that the contaminated water is separated into a small volume of water with concentrated PFAS and a large volume of water with low levels of PFAS. The "cleaned water" and the PFAS concentrate can then be stored in different places.

### Description of related art

It is well known in the art of PFAS removal, to use foaming techniques. In prior art foaming techniques, contaminated water is caused to foam, for example via agitation or via air injection into the water via a diffuser. The foam forms on top of the contaminated water as a layer of foam. The foam layer can then be mechanically removed from the surface of the liquid. For example, such a concept is disclosed in US11447401B1, where foam is created on top of the water and is then collected. Similarly, in documents WO2022118292 and WO2022167958A1 a froth layer is generated and then removed from the surface of the water that is being treated. Multi step foam generating processes are disclosed in US2023/127819. Such processes are effective, but require that the liquid to be treated will foam. Many liquids which need to be treated do not foam in any significant amount and as such, the foaming techniques don't work on these liquids without additives.

Another method is disclosed in EP3233229. In this disclosure, PFAS is separated from contaminated water by creating an aerosol on the surface of the water and then removing the aerosol from the surface of the water. In this method, air is injected into the contaminated water and when the bubbles leave the liquid at the surface of the water, they create an aerosol which comprises airborne water drops, air and PFAS. The PFAS will attach to the airborne water drops. The PFAS containing aerosols are then separated from the water. The disclosure is however silent on how the aerosols are separated from the water and how the aerosols are post processed. A method according to this disclosure has not made it into industrial applications. A similar method is disclosed in US2023/0322592 where an aerosol is generated above a surface of contaminated water. The PFAS containing aerosol is collected in an adsorbent or absorbent positioned above the water which is afterwards cleaned or recycled.

### Summary of the invention

It is a first aspect of the current invention to provide a method and a system to collect PFAS via water aerosols and to separate the aerosol into air and water droplets with PFAS in an effective manner.

These aspects are solved by the system according to claim 1. In this way instead of requiring multiple steps to separate PFAS from contaminated water, a large portion of the separation can be done in a single process close to the water surface and is therefore more efficient.

In some embodiments, the apparatus further comprises a fluid outlet for emptying contents of the water droplet collecting channel. In some embodiments, the fluid outlet is connected to a collection tank.

In some embodiments, the bubble generator is arranged near the bottom of the tank. In some embodiments, the bubble generator is arranged at the bottom of the tank. In some embodiments, the bubble generator is a diffuser. In some embodiments, the apparatus comprises a gas supply connected with the bubble generator. In some embodiments, the bubble generator generates a pressure difference in the water to cause bubbles to form in the water. In some embodiments, the water is injected into the tank at a pressure which is higher than the pressure in the tank. In some embodiments, the bubble generator generates a venturi which sucks gas into the water to generate bubbles. In some embodiments, the permeable separation element is in the form of a plate. In some embodiments the plate element has a width and length which are both at least 2, 3 or 4 times greater than its thickness. In some embodiments, the lower surface of the permeable separation element is arranged at an angle to a horizontal plane of between 0 and 90 degrees. In some embodiments, the angle is less than 70 degrees, less than 50 degrees or less than 30 degrees. In some embodiments, the angle is greater than 3 degrees, greater than 5 degrees, greater than 7 degrees. In some embodiments, the permeable separation element is arranged such that when water is arranged in the tank, the lower surface of the permeable separation element covers at least 80% of the exposed surface of the water. In some embodiments of the invention, the permeable separation element comprises a first element and a second element, the first and second elements each having a lower surface facing the water, when the water is arranged in the tank, the lower surface of the first element being arranged at a first angle to the upper surface of the water and the lower surface of the second element being arranged at a second angle to the upper surface of the water, the first and second angles being greater than 2 degrees and less than 30 degrees, but being arranged in different directions of rotation from the surface of the water.

In some embodiments, the apparatus further comprises a gas outlet arranged above the permeable separation element. In some embodiments, a source of suction is connected to the gas outlet. In some embodiments, the pressure above the permeable separation element can be lowered such that it is less than the pressure below the permeable separation element. In some embodiments, the source of suction is a vacuum pump. In some embodiments, the apparatus further comprises a gas inlet. In some embodiments, the gas inlet is arranged at an end of the apparatus which is opposite to the gas outlet. In some embodiments, the gas inlet is arranged underneath the permeable separation element.

In some embodiments, the apparatus further comprises a demister arranged above the permeable separation element. In some embodiments, the demister comprises a lower surface which is hydrophobic. In some embodiments, the lower surface of the demister is arranged such that water dripping from the lower surface of the demister drips down onto an upper surface of the permeable separation element. In some embodiments, the upper surface of the permeable separation element drains into the same collection channel as the lower surface of the permeable separation element.

In some embodiments, the lower surface of the permeable separation element is hydrophilic. According to this specification, the term "hydrophilic" when used to describe a surface, should be understood as a material which has properties that can transport hanging droplets at the surface along the surface. In the embodiments described herein, the lower surface of the permeable separation element is described as hydrophilic which means that water droplets will be attracted to the surface and will tend to run along the surface when the surface is arranged at an angle, instead of dripping off the surface. With a hydrophilic surface, the water droplets on the surface will run along the surface, collect at a lower edge and then drip off the lower edge when they reach a certain size. A hydrophobic surface would be the opposite, where water droplets contacting the surface would be more repelled from the surface and would drip away from the surface instead of running along the surface to collect at one edge. In some embodiments, the permeable separation element comprises a hydrophilic material. When using the term hydrophilic to describe a material, this would be understood as being a material which allows transporting water inside the material, without dripping out of the material. In some embodiments, the hydrophilic material is arranged in at least 80% of the area of the permeable separation element. In some embodiments, at least 90% of the area of the permeable separation element comprises the hydrophilic material. In some embodiments, the lower surface of the permeable separation element is treated to become more hydrophilic. In some embodiments, the lower surface of the permeable separation element is provided with a roughening operation, for example via sandblasting.

In some embodiments, the permeable separation element comprises a plastic foam or sponge pad or membrane or mesh pad or a coalescing filter. In some embodiments, the material of the permeable separation element comprises polyurethane.

In some embodiments, the thickness of the permeable separation element is greater than 0.1 cm. In some embodiments, the thickness could be more than 0.2 cm or more than 0.3 cm. In some embodiments, the thickness could be less than 10cm, less than 7 cm or less than 5 cm.

In some embodiments, the permeable separation element is arranged such that when water is filled into the tank, the lower surface of the permeable separation element is at a distance from the surface of the water, said distance being greater than 0.1 cm and less than 40 cm. In some embodiments, the distance is less than 30cm. In some embodiments, where the lower surface of the permeable separation element is arranged at an angle to the horizontal of greater than zero, the average distance between the surface of the water and the lower surface of the permeable separation element is less than 40cm, less than 30cm or less than 20cm.

In some embodiments, the tank comprises an inlet for filling water into the tank and an outlet for emptying water from the tank, and where the inlet is arranged lower than the outlet. In some embodiments, the inlet is arranged on one side of the tank and the outlet is arranged on the other side of the tank. In some embodiments, the tank has a rectangular shape with a length which is greater than its width and height. In some embodiments, the substance collecting channel slopes from one end of the tank to the other end of the tank. In some embodiments, the tank comprises an overflow edge arranged at the side of the tank where the outlet is arranged, in that the apparatus comprises a water collection channel arranged along the overflow edge and in that the outlet drains the water collection channel. In some embodiments, there is a barrier element arranged parallel to the overflow edge and offset from the overflow edge, said barrier element being arranged to block water flow from the upper surface of the water from draining directly over the overflow edge. In some embodiments, the barrier element is arranged less than 20cm, less than 15cm or less than 10cm from the overflow edge. In some embodiments, the barrier element is arranged to extend at least 1cm above the overflow edge and at least 1cm below the overflow edge.

The invention also relates to a method for separating PFAS from water said method comprising the steps of:
a. feeding water which contains PFAS into a tank,
b. generating gas bubbles in the water via a bubble generator such that a water aerosol is generated on the surface of the water where PFAS is attached to at least some of the water droplets in the water aerosol,
c. passing the water aerosol with PFAS through a permeable separation element which captures the water droplets with PFAS on a lower surface of and inside the permeable separation element while allowing the gas of the water aerosol to pass through the permeable separation element, and
d. collecting the water droplets with PFAS in a water droplet collection channel arranged along a bottom edge of the permeable separation element.

In some embodiments of the method, the method comprises a continuous flow of water within the tank.

In some embodiments, the method further comprises the step of controlling the distance between the surface of the water in the tank and the lower surface of the permeable separation element to adjust a concentration of PFAS in the collected water droplets. In some embodiments, the distance is controlled by controlling the volume of water in the tank. In some embodiments, the distance is controlled by adjusting the position of the permeable separation element. By increasing the distance, the number of "heavy water droplets" reaching the surface will be reduced. By decreasing the distance, the number of "heavy water droplets" reaching the surface will increase. As the heavy water droplets will have greater water volume, the concentration of PFAS in the heavy water droplets will be lower than in the lighter water droplets. Hence, moving the lower surface very close to the water surface will capture a high amount of water, but result in a lower concentration of PFAS. Moving the lower surface further away from the water surface, will result in less PFAS capture, but higher PFAS concentration in the water. Hence, the distance is a balance which can be adjusted to get the most optimal output.

In some embodiments, said method further comprising the steps of measuring the inlet gas flow, controlling the suction of the outlet gas, controlling the amount of gas entering the tank via the bubble generator, and maintaining constant aerosol flow through the permeable separation element.

In a variation of some of the embodiments described above, which forms a second invention which could be the subject of a divisional application, instead of using a permeable separation element, a separation element could be provided which is non-permeable but which is arranged as otherwise described in other embodiments, except that gas is able to flow past the separation element, for example around the sides of the separation element, or through holes passing through the separation element, and flow past/through a demister arranged above the separation element. In this way, the lower surface of the separation element would provide a first level of separation and the demister above the separation element would provide a second level of separation.

The current specification also discloses a third invention, which could be the subject of a divisional application. The third invention is related to an apparatus for treating water containing PFAS, said apparatus comprising: a first tank suitable for containing water, a bubble generator arranged to, when water containing PFAS is arranged in the first tank, generate bubbles in the water in the first tank such that a water aerosol is generated on the surface of the water where PFAS is attached to at least some of the water droplets in the water aerosol, means to capture the water aerosol, a second tank, means to convert the captured water aerosol to a liquid and store the liquid in the second tank, foaming means arranged in the second tank to generate a foam on a surface of the liquid in the second tank and means to remove the foam from the surface of the liquid in the second tank.

The first tank, the bubble generator, the means to capture the aerosol, the means to liquify the aerosol and the means for transferring the liquid to the second tank could be of the kind disclosed in this specification, both with respect to the first or second inventions as disclosed above. As such, features disclosed in relation to the first and/or second inventions could be combined with the broad disclosure of the third invention as described herein. Other suitable mechanisms could also be used. Foaming means suitable for the foaming operation in the second tank are known in the art, as mentioned previously in this specification. Hence, foaming operations and suitable foaming apparatus will not be described in detail in this specification, but the reader is referred to the mentioned prior art for teachings on how to implement a foaming operation. The scope of protection of the third invention should however not be limited to the foaming operations disclosed in the prior art.

The third invention also relates to a method for separating PFAS from water containing PFAS, said method comprising the steps of: feeding water which contains PFAS into a first tank, generating gas bubbles in the water in the first tank via a bubble generator such that a water aerosol is generated on the surface of the water where PFAS is attached to at least some of the water droplets in the water aerosol, capturing the water aerosol, converting the water aerosol to a liquid, collecting the liquid in a second tank, foaming the liquid in the second tank to generate a foam on a surface of the liquid in the second tank and removing the foam from the surface of the liquid in the second tank.

It should be emphasized that the term "comprises/comprising/comprised of" when used in this specification is taken to specify the presence of stated features, integers, steps or components but does not preclude the presence or addition of one or more other features, integers, steps, components or groups thereof.

### Brief description of the drawings

In the following, the invention will be described in greater detail with reference to embodiments shown by the enclosed figures. It should be emphasized that the embodiments shown are used for example purposes only and should not be used to limit the scope of the invention.
Fig. 1 is a schematic side view of a first embodiment of an apparatus for separating PFAS from water via a batch treatment.
Fig. 2 is a schematic side section view of the apparatus of figure 1 according to the line II-II defined in figure 1.
Fig. 3 is a schematic perspective view of an portion of an embodiment of an apparatus for separating PFAS from water via a continuous flow treatment.
Fig. 4 is another schematic perspective view of the apparatus of figure 3 shown from a different angle.
Fig. 5 is a partial schematic perspective view of the apparatus of figure 3 showing some more components of the apparatus.
Fig. 6 is a partial schematic section view of the apparatus of figure 5 according to the line VI-VI as defined in figure 5.
Fig. 7 is a schematic section view of the apparatus of figure 3 according to the line VII-VII as defined in figure 3. In order to better illustrate the function of the apparatus, some of the additional elements / fold lines of the metal have been removed from the view.
Fig. 8 is a schematic section view of the apparatus of figure 3 according to the line VIII-VIII as defined in figure 4. In order to better illustrate the function of the apparatus, some of the additional elements / fold lines of the metal have been removed from the view.
Fig. 9 is a schematic section view of the apparatus of figure 3 according to the line IX-IX as defined in figure 4. In order to better illustrate the function of the apparatus, some of the additional elements / fold lines of the metal have been removed from the view.
Fig. 10 is a schematic top view of the apparatus of figure 5 and 6.
Fig. 11 is a schematic cross section view through a third embodiment of a treatment apparatus.
Fig. 12 is a schematic cross section view through a fourth embodiment of a treatment apparatus.
Fig. 13 is a schematic cross section view through an example of an apparatus according to the third invention.

### Detailed description of the embodiments

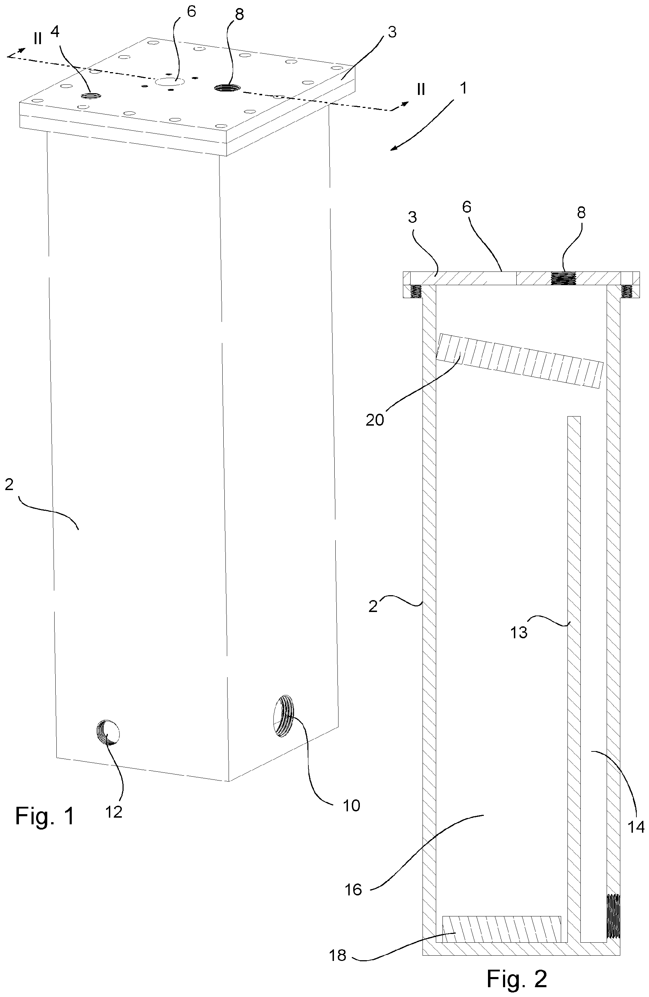

Figures 1 and 2 illustrate a first embodiment 1 of an apparatus 1 for processing water, and more particularly, an apparatus for separating PFAS from contaminated water. In this first embodiment, the apparatus is intended to be used in a batch like process, which means that the system treats a specific volume of contaminated water at a time. Once the specific volume is processed enough, the cleaned water is emptied and new batch of contaminated water is introduced into the tank.

The system 1 comprises a tank 2 and a lid 3. In order for the system to be operated, the tank 2 is filled with contaminated water and then the lid 3 seals the tank. The lid 3 has a first opening 4 through which air can be injected into the tank and to a diffuser 18 arranged in the bottom of the tank. The lid also has a maintenance access 6 which is an opening in case something needs to be maintained during the process. The contaminated water can also be filled into the tank via this opening if the lid is not to be removed. Lastly, the lid has an air outlet 8 which allows air to come out of the tank during use. The air outlet 8 is connected to an air pump (not shown) which creates a vacuum effect and also guides the air to one or more series-connected demisters, with which any remaining airborne water droplets containing PFAS are collected. The tank 2 also comprises a water sample outlet 12, which is used during the process to test the progress of the PFAS separation process and to empty the tank when the process is finished. The tank also comprises a PFAS concentration sample outlet 10 which is also used during the process to test the concertation of PFAS collected. The outlet is also used to empty the PFAS from the tank when the process is finished.

In Figure 2, which is a sectioned view of figure 1, the interior of the apparatus 1 can be seen. The diffuser 18 is placed in the bottom of the tank 2. The purpose of the diffuser 18 is to blow air into the contaminated water in order to generate bubbles. As the bubbles of air flow upwards through the water, PFAS will attach itself to the bubbles. In this way, the PFAS can be guided to the surface of the contaminated water. When the bubbles exit the water surface, the bubbles will burst and create an aerosol which is a mix of air, water droplets and PFAS. The PFAS will be attached to the water droplets. Hence, collecting the water droplets in the aerosol will lead to a concentrate of water and PFAS.

Through the ventilation of the system, the aerosol is guided to pass through a permeable separation element 20 which can separate the airborne water droplets with PFAS from the air. By passing the aerosol through the permeable separation element 20, the water droplets containing the PFAS will be captured by the separation layer 20. The separation layer 20, is made of a hydrophilic material, which has the ability to keep the collected water droplets with PFAS inside and on the surface of the material.

The tank 2 is partitioned into two separate chambers by a dividing wall 13. The two chambers are both below the permeable separation element 20. A first chamber 16 is a contaminated water chamber 16 where the contaminated water is being processed and which contains the diffuser 18. The second chamber is a PFAS collection chamber 14 which collects the water droplets with PFAS.

In this embodiment, the permeable separation element 20 is placed at an angle with a lower edge of the permeable separation element being arranged above the PFAS concentrate collection chamber 14. Due to the hydrophilic properties of the material of the separation element 20, the water droplets will be captured inside and on the surface of the separation element 20, and due to the inclination of the separation element and due to gravity, the agglomerated water with PFAS will move towards the lower edge of the separation layer 20. When it reaches the edge it will drip into the PFAS concentrate collection chamber 14. After the aerosol passes through the separation layer 20, the air gets sucked out from outlet 8 and is guided to demisters (not shown) for extra water droplet with PFAS separation if needed.

It should be noted that in the above description, air was used to generate bubbles. However, the process would also work with other types of gasses, for example nitrogen. The process/apparatus should therefore not be limited to air as the gas, but could include any form of suitable gas.

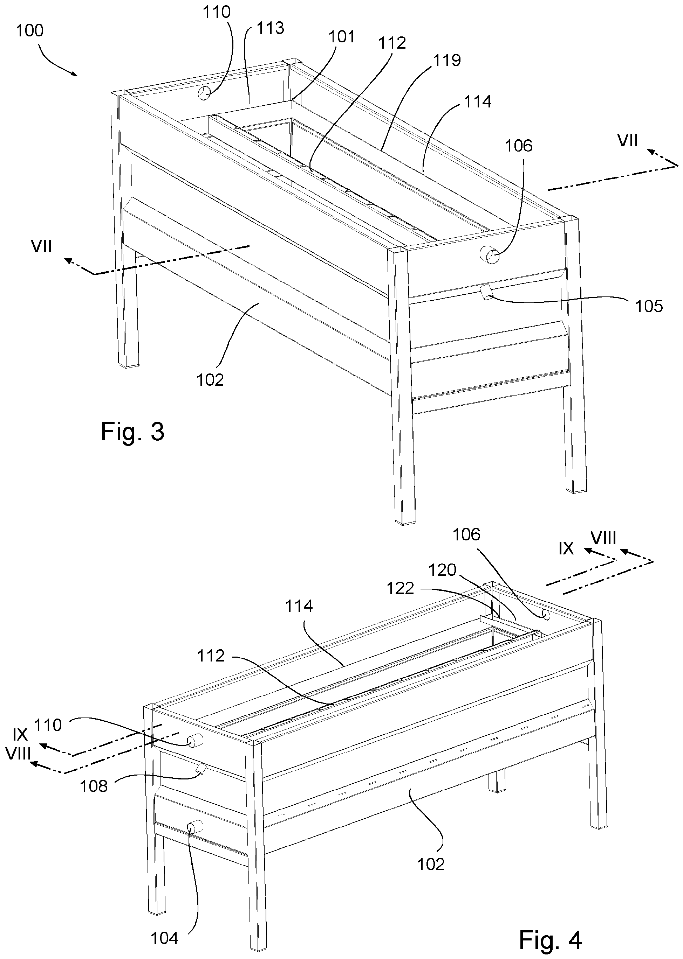

Figure 3 to 10 show different views of another embodiment of an apparatus according to the invention. This embodiment is suitable for continuous processing of contaminated water, where contaminated water can be continuously introduced into the apparatus and less contaminated water can be removed continuously.

The apparatus 100 comprises a rectangular main tank 102. On the top of the tank 102, a lid (not shown) is placed when the system is in operation. Near the bottom and on one side of the tank 102, there is a water inlet 104 which is used to introduce contaminated water into the tank 102 in an continuous manner. In the bottom of the tank 102 there are a number of diffusers 130. In one embodiment, there are 33 different diffusers, however in the figures, the diffusers are shown as a single element for the sake of simplicity. The diffusers push air into the contaminated water to create bubbles. As in the previous embodiment, when the bubbles break the surface of the water, an aerosol is generated above the surface of the water.

Near an upper portion of the tank 102, there are three water droplet collection channels extending along the length of the tank. The water droplet collection channels comprise a centre water droplet collection channel 112 and two side water droplet collection channels 114 which are attached to the long sides of the tank 102. The water droplet collection channels, collect water droplets after the aerosol has passed through a permeable separation element 140 as will be described later on. At one end of the tank opposite to the inlet side, an elongated outlet water channel 120 with an overflow edge 122 is provided. The outlet water channel is connected to the water in the tank via the overflow edge 122, so that the treated water can pass over the edge and into the outlet channel 120 and then exit via a water outlet 105. It should be noted that the upper edge of the overflow edge is located below the upper edges 119 of the water droplet collection channels 112, 114. This is illustrated by the dotted lines 115,117 representing the level of the upper edge of the overflow edge and the upper edge 119 of the water droplet collection channels respectively.

The main principle is that the water is filled into the tank at a lower level and it exits the tank at an upper level. In this way, the treatment time of the contaminated water in the tank is increased. If the inlet and outlet were both placed in the bottom of the tank, there would be a risk that some of the contaminated water would go directly from the inlet to the outlet without getting treated. By placing the outlet at the top of the tank, the risk for contaminated water going directly from the inlet to the outlet is reduced.

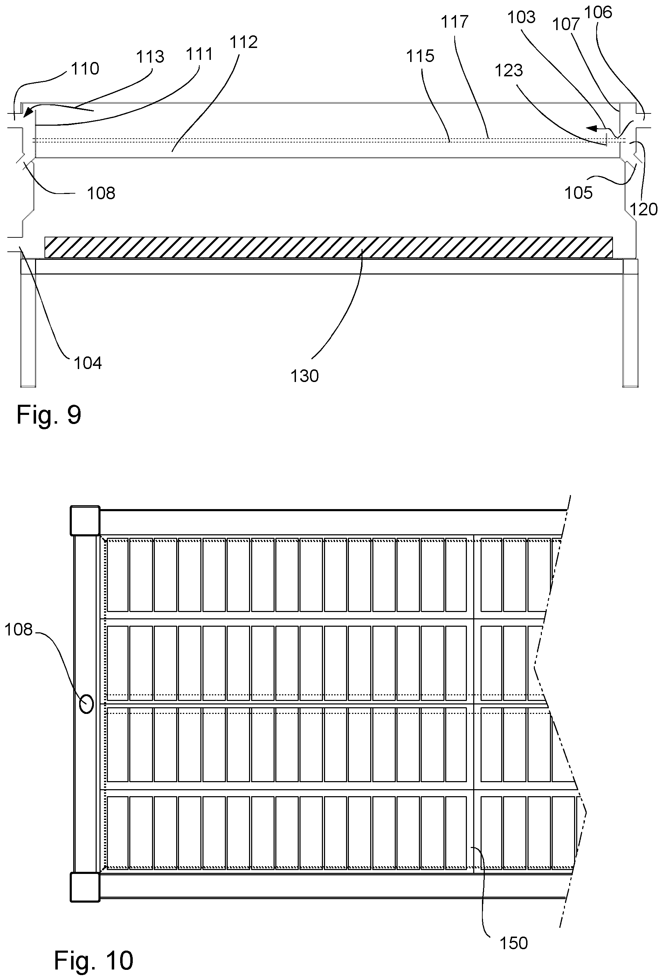

However, it should be noted that the bubbles will drive the PFAS from the body of water to the surface of the water. Hence, there will be a concentration of PFAS near the surface of the water. Hence, skimming the surface water would result in a potentially high concentration of PFAS.. A water barrier element 123 is therefore placed across the surface of the water offset a short distance from the overflow edge. This can more easily be seen in figures 4 and 9. In this way, the water from the surface is not able to directly flow over the overflow edge. Rather, water from below the barrier element flows past the barrier element and then over the overflow edge.

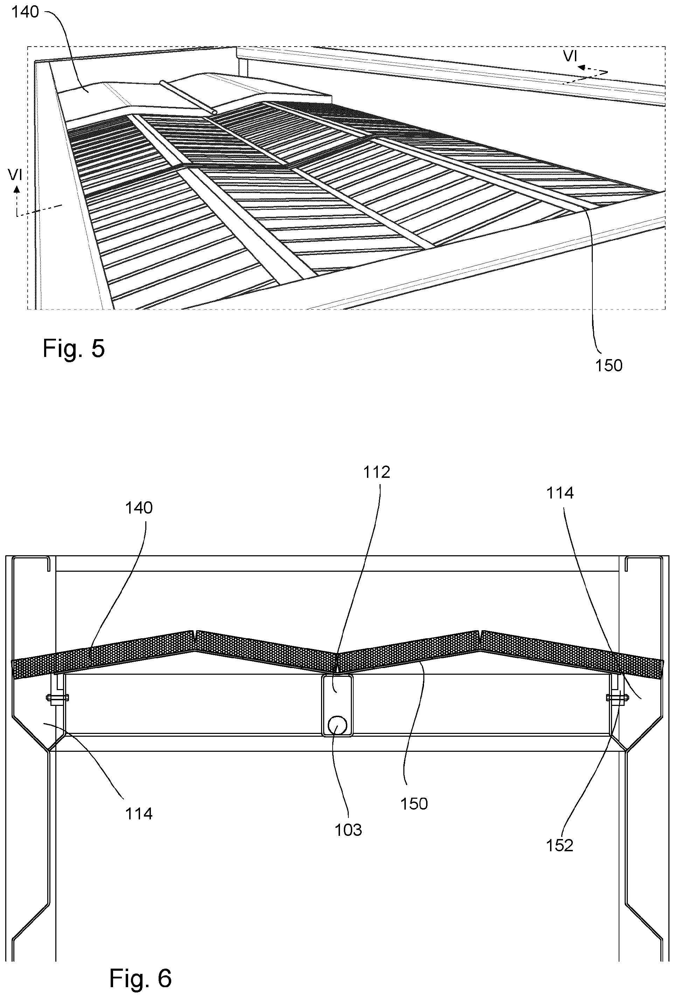

Above the water droplet collection channels, the permeable separation element 140 is placed as seen in figures 5 and 6. The separation element is supported by a frame 150. The frame can be made out of any suitable material, for example metal or wire. The frame 150 is made in a way that can hold the separation element 140 in place while also having enough space for gas to pass through it. In this embodiment, the frame 150 comprises a metal construction comprising longitudinal pieces running the length of the tank and horizontal cross pieces to form a rectangular net structure. In this embodiment, the lower surface of the metal frame is sandblasted to increase the surface roughness of the material. In this way, the lower surface of the frame element will become more hydrophilic and water droplets collecting on the surface will run along the surface, rather than dripping back into the water. Also in this embodiment, the lower surface is formed as a continuous surface without any ridges arranged perpendicular to the water droplets flowing along the surface which would trigger water droplets to drip into the water before reaching the lower edge.

In this embodiment, the frame 150 is formed in two separate sections, a rear section and a forward section, as seen in figure 5. The forward and rear sections can be removed from the tank separately. However, in general the form of the frame is not essential and can be formed in many different ways. In the current embodiment, the frame comprises four surfaces arranged along the length of the tank. The four surfaces are arranged in the form of an upside down W. Likewise, the separation element, in this embodiment, comprises four separate elongated plate portions, corresponding to the form of the frame. Again, the separation element forms a form of upside down W shape.

Figure 6 illustrates the upside down W form via a sectioned front view of the apparatus. In this embodiment, the permeable separation element 140 is made of a Polyurethane (PUR) foam material with a thickness of around 2cm. The PUR foam acts as a hydrophilic material whereby water droplets are attracted to the material and tend to stick to it. In this way, as the aerosol generated by the bubbles from the diffuser moves upwards it will contact the PUR foam material. The aerosol will pass through the PUR foam material. As it passes through the material, the water droplets will be attracted to the material and will stick to the surface and/or be caught inside the material while the air will continue through the material and exit the material at its upper surface. The air leaving the separation element will be essentially free of PFAS.

Due to the upside down W form of the separation element, each of the plate portions of the separation element are arranged at an angle to the horizontal. In this embodiment, the angle is roughly 10 degrees, however, other angles are also possible. This helps the water droplets which are captured by the separation element to flow to the edges which are lower, due to gravity, and when they get concentrated enough or reach the edge they drip into the collection channels. In this view, the side PFAS collection channels 114 and the centre PFAS collection channel 112 can be seen. The separation element 140 in this embodiment is partitioned into four pieces, each of which has an inclination towards a collection channel. The separation element 140 is placed on the frame 150 which is mounted on the sides of the tank via frame support elements 152. As described before, the collected water droplets drip into the collection channels and are guided out of the tank 102 through the PFAS outlet 108. On the water inlet side of the tank, there is a PFAS concentrate outlet 108, which is used to collect the water droplets with PFAS. The water droplet collection channels 112, 114 are connected to the outlet 108 via an outlet channel 113 which is arranged along the side of the tank close to the PFAS concentrate outlet 108. The side water droplet collection channels 114 drain into the outlet channel 113 via corner channels 101. The centre water droplet collection channel 112 drains into the outlet channel via an opening 103.

On the water inlet side of the tank, there is also an air outlet 110 which collects the air that has passed through the separation layer 140. Opposite to the inlet side, on the outlet side, there is an air inlet 106. The purpose of the air inlet 106 is to provide some air into the tank and create a stream flow phenomenon which guides the air, which has passed through the separation element 140 (not shown) to the air outlet 110. After it gets sucked out from the air outlet 110, the air is guided to demisters (not shown) downstream of the air outlet 110 for extra PFAS separation if needed. Concentrate consisting of the agglomerated water droplets with PFAS from the demisters is collected via the pipe from the air outlet 110. The concentrate will, through the force of gravity, run back through the air outlet pipe and will be collected in the concentrate outlet 108.

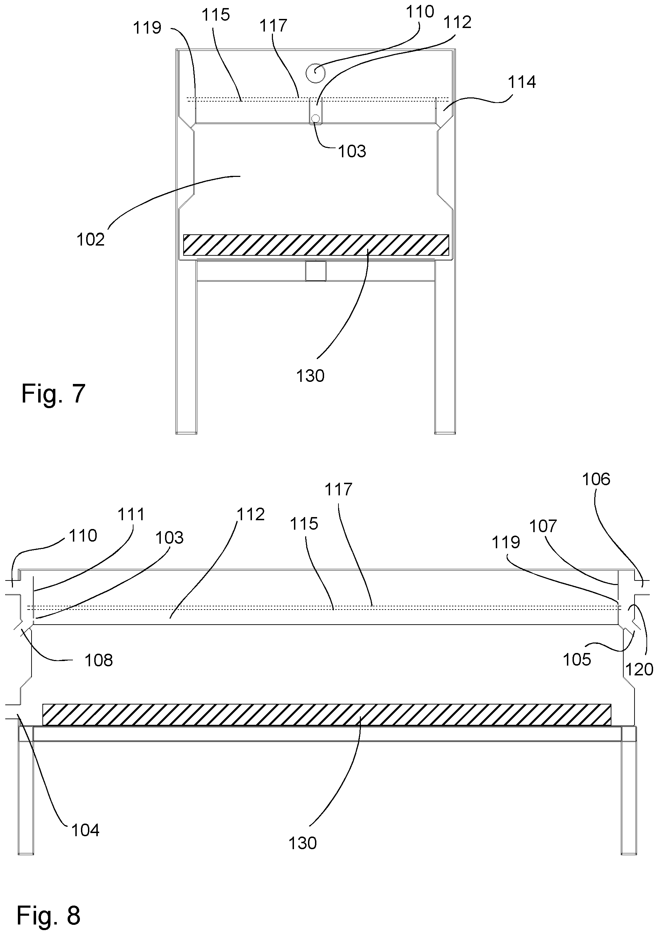

In figures 8 and 9, some further details relating to the air flow are shown. At the inlet side a plate 107 is provided which guides the airflow 103 such that it enters the tank below the permeable separation element 140. Likewise at the air outlet side, a plate 111 is provided to guide the airflow 113 such that it pulls the air out of the tank above the permeable separation element. Note that the plates 107, 111 are not shown in the other figures.

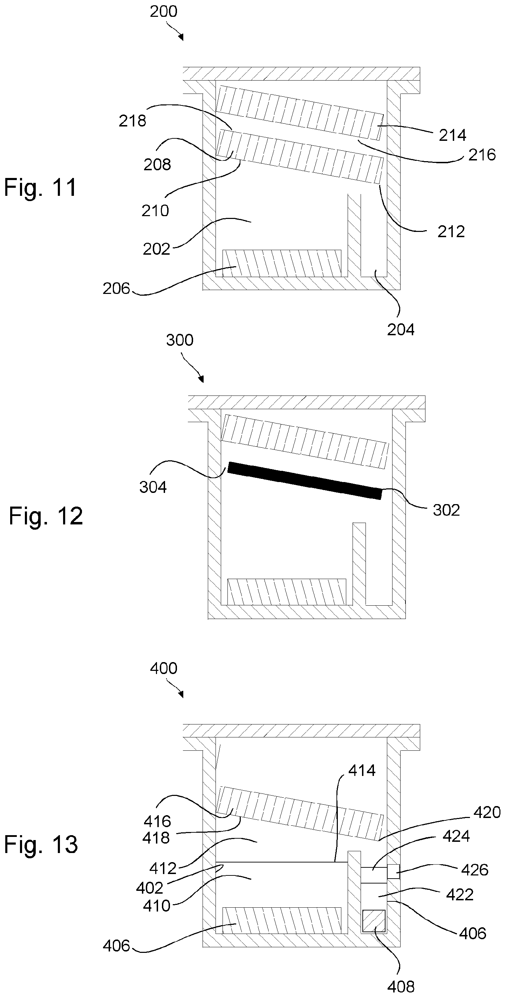

Figure 11 shows a very schematic embodiment 200 of a water treatment apparatus according to the current invention. In this embodiment, a tank 202 is provided with a collection channel 204 arranged along one side of the tank. The tank could be a batch processing arrangement, similar to the first embodiment or a continuous processing arrangement, similar to the second embodiment with an inlet and an outlet provided at opposite ends of the tank.

A diffuser 206 is arranged in the bottom of the tank. A first permeable separation element 208 is arranged in the tank above the surface of the water. The permeable separation element 208 is made from a hydrophilic material which allows gas to pass through the material, but which captures water. Water captured on the lower surface 210 or in the material will run along the lower surface due to the angle of the surface until it reaches the lower edge 212 of the separation element where it will drip down into the collection channel 204. This is very similar to the first and second embodiments. However, in this embodiment, a demister 214 is additionally provided above the separation element. The demister is made from a hydrophobic material. In this way, when water droplets contact the demister, the water droplets will coalesce on the lower surface 216 of the demister and then drip down onto the upper surface 218 of the permeable separation element. These will then run along the upper surface of the separation element, and/or run into the material where they will run along the lower surface of the element until they again reach the lower edge of the separation element where they will drip into the collection channel.

Figure 12 shows a very similar apparatus 300, but related to the second invention as described above. In this embodiment, instead of a permeable separation element, a non-permeable separation element 302 is provided in the form of a plate with a hydrophilic lower surface, for example a glass plate or a plastic plate. Air is able to pass the non-permeable separation element via a gap 304. However, the rest of the function is the same as above.

Figure 13 discloses a very schematic illustration of an apparatus according to the third invention. The apparatus shown in figure 13 is very similar to the apparatus shown in figures 1-2, 11 and 12, however, it should be noted that other forms of apparatus could also be implemented.

The apparatus 400 of figure 13 comprises a first tank 402, a second tank 404, a first diffuser 406 arranged in the first tank and a second diffuser 408 arranged in the second tank. Water 410 containing PFAS is introduced into the first tank and the diffuser generates bubbles in the first tank which generates an aerosol 412 containing PFAS particles at the surface 414 of the water in the first tank. A permeable separation element 416 is arranged above the first tank, similar in form to the ones described above. The aerosol is captured by the permeable separation element and the liquid drops collect on the bottom surface 418 of the permeable separation element. Since the bottom surface is arranged at an angle to the horizontal, the liquid drops will run down along the bottom surface until they reach a lower edge 420 of the lower surface. They will then drip off the lower edge and collect as a liquid 422 in the second tank 404. When the second diffuser is activated, due to the higher concentration of PFAS in the second tank, instead of generating an aerosol, a foam 424 will be generated at the surface of the liquid in the second tank. This foam can then be removed through suction via an opening 426 in the side of the second tank.

In this described, very schematic, example, the aerosol and foam processes occur in a single container, however, it is also possible to have the aerosol based process in a first container and the foam based process in a second container. The two containers could be connected via a tube/pipe/hose/etc. For example. It would be possible to have an apparatus as described in figures 3-10 where the liquid generated in the apparatus is fed to a separate container via a hose where a diffuser is arranged to generate a foam in the separate container. It would also be possible to just collect the liquid from the aerosol based process in a container and then transfer the container with the liquid to a second apparatus where it is foamed.

Likewise, it would be possible to have additional steps in between the two containers. For example, one could consider an apparatus comprising an aerosol generating apparatus with a first tank, where the aerosol is sucked out of the aerosol generating apparatus and then liquified in a second apparatus. The liquid from the second apparatus could then be fed to a third apparatus comprising a second tank with a diffuser where a foam could be generated on the surface of the liquid in the second tank. The foam could be removed from the second tank via a second suction apparatus or via a scraping apparatus, whereby the foam is moved to a third tank. The foam can then be allowed to collapse in the third tank and become a liquid which can then be disposed of or concentrated even further.

It is to be noted that the figures and the above description have shown the example embodiments in a simple and schematic manner. Many of the specific mechanical details have not been shown since the person skilled in the art should be familiar with these details and they would just unnecessarily complicate this description. For example, the specific materials used and the specific manufacturing procedures have not been described in detail since it is maintained that the person skilled in the art would be able to find suitable materials and suitable processes to manufacture the apparatus and implement the method according to the current invention.

## Claims

1. Apparatus for treating water containing PFAS, said apparatus comprising:
a. a tank suitable for containing water,
b. a bubble generator arranged to, when water is arranged in the tank, generate bubbles in the water in the tank,
c. a permeable separation element comprising a lower surface, said permeable separation element being arranged such that when water is arranged in the tank, said lower surface is arranged above an upper surface of the water and is arranged such that an average angle between said lower surface of the permeable separation element and the upper surface is greater than 2 degrees, and
d. a water droplet collecting channel arranged along a lower edge of the lower surface of the permeable separation element.

2. Apparatus according to claim 1, **characterized in that** the apparatus further comprises a gas outlet arranged above the permeable separation element.

3. Apparatus according to claim 1 or 2, **characterized in that** the lower surface of the permeable separation element is hydrophilic.

4. Apparatus according to claim 1, 2 or 3, **characterized in that** the permeable separation element comprises a plastic foam or sponge foam pad or membrane or mesh pad or a coalescing filter.

5. Apparatus according to any one of claims 1 to 4, **characterized in that** the thickness of the permeable separation element is greater than 0.1 cm.

6. Apparatus according to any one of claims 1 to 5, **characterized in that** the permeable separation element is arranged such that when water is filled into the tank, the lower surface of the permeable separation element is at a distance from the surface of the water, said distance being greater than 0.1 cm and less than 40 cm.

7. Apparatus according to any one of claims 1 to 6, **characterized in that** the tank comprises an inlet for filling water into the tank and an outlet for emptying water from the tank, and **in that** the inlet is arranged lower than the outlet.

8. Method for separating PFAS from water said method comprising the steps of:
a. feeding water which contains PFAS into a tank,
b. generating gas bubbles in the water via a bubble generator such that a water aerosol is generated on the surface of the water where PFAS is attached to at least some of the water droplets in the water aerosol,
c. passing the water aerosol with PFAS through a permeable separation element which captures the water droplets with PFAS on a lower surface of and inside the permeable separation element while allowing the gas of the water aerosol to pass through the permeable separation element, and
d. collecting the water droplets with PFAS in a water droplet collection channel arranged along a lower edge of the lower surface of the permeable separation element.

9. Method according to claim 9, where there is a continuous flow of water through the tank.

10. Method according to claim 9 or 10, **characterized in that** said method further comprises the step of controlling the distance between the surface of the water in the tank and the lower surface of the permeable separation element to adjust a concentration of PFAS in the collected water droplets.
